# EUROPEAN PATENT APPLICATION

(11) **EP 4 567 186 A1**
(43) Date of publication of application: **11.06.2025**
(21) Application number: 24744819.4
(22) Date of filing: 12.01.2024
(51) Int. Cl.: D06F 89/00, B25J 9/14, B25J 11/00

(54) **ROBOTIC DEVICE FOR WASHING, DRYING, AND FOLDING**

(30) Priority: 18.01.2023 JP 2023005885
(71) Applicant: Samsung Electronics Co., Ltd., Suwon-si, Gyeonggi-do 16677 (KR)
(72) Inventor: YAMAGISHI, Takeshi, Yokohama-shi, Kanagawa 230--0027 (JP)
(74) Representative: Gulde & Partner
(86) International application number: PCT/KR2024/000646
(87) International publication number: WO 2024/155038

(57) **Abstract**

A robotic device includes: an insertion unit configured to insert a deflated airbag into an inside of clothing; an expansion unit configured to inflate the clothing by inserting gas into the airbag to expand the airbag; a deflation unit configured to deflate the airbag by taking out the gas from the airbag; and an extraction unit configured to extract the deflated airbag from the inside of the clothing.

## Description

### TECHNICAL FIELD

The present disclosure relates to a robotic device.

### BACKGROUND ART

In the related art, a laundry folding device for automatically folding laundry may have a machine frame, a vertical folding device, and a horizontal folding device disposed on an outlet side of the vertical folding device. The horizontal folding device has two laundry conveyors disposed back and forth in a direction of conveying laundry entering from the vertical folding device, where these conveyors are spaced apart from each other due to a gap extending substantially over the entire width of the horizontal folding device. Laundry can be introduced into the gap by making a first horizontal folding line, and a means is provided to change a gap width before introducing the laundry to suit a type of laundry.

### TECHNICAL PROBLEM

When a configuration of inserting a deflated airbag into clothing to expand the airbag is not adopted, it is not easy to manipulate the clothing into an unfolded shape required for folding laundry, for example.

It is an aspect of the present disclosure to facilitate the manipulation of a garment into the unfolded shape required, for example, to open it.

### TECHNICAL SOLUTION

According to an aspect of the disclosure, a robotic device includes: an insertion unit configured to insert a deflated airbag into an inside of clothing; an expansion unit configured to inflate the clothing by inserting gas into the airbag to expand the airbag; a deflation unit configured to deflate the airbag by taking out the gas from the airbag; and an extraction unit configured to extract the deflated airbag from the inside of the clothing.

The expansion unit may be further configured to dry the clothing by increasing a temperature of the gas inserted into the airbag. The expansion unit may be further configured to insert the gas into the airbag using a supply and exhaust pump, and the deflation unit may be further configured to extract the gas from the airbag using the supply and exhaust pump.

The robotic device may further include a folding unit configured to fold the clothing by folding a mounting plate on which the clothing is mounted.

The deflation unit may be further configured to remove the gas from the airbag on the mounting plate while the clothing is adsorbed on the mounting plate.

The folding unit may be further configured to fold the mounting plate while the clothing is adsorbed on the mounting plate.

The folding unit may be further configured to fold the mounting plate while the clothing is heated and pressed on the mounting plate.

The robotic device may further include a folding unit configured to fold the clothing by folding the airbag while the airbag is inserted in the clothing.

The airbag may have a folding line for folding.

The folding unit may include a robot arm may be further configured to fold the airbag at the folding line.

The folding unit may include an actuator provided at the folding line and configured to fold the airbag at the folding line.

The insertion unit may be further configured to insert the airbag into the clothing through a hanger on which the clothing is hung.

The robotic device may further include a washing unit configured to wash the clothing while the clothing is hung on the hanger.

The robotic device may further include a drying unit configured to dry the clothing while the clothing is hung on the hanger.

According to an aspect of the disclosure, a method performed by a robotic device, includes: inserting a deflated airbag into an inside of clothing; inflating the clothing by inserting gas into the airbag to expand the airbag; deflating the airbag by removing the gas from the airbag; and extracting the deflated airbag from the inside of the clothing.

The method may further include drying the clothing by increasing a temperature of the gas inserted into the airbag.

According to an aspect of the disclosure, a method performed by a robotic device, includes: the expansion unit may be further configured to insert the gas into the airbag using a supply and exhaust pump, and the gas may be extracted from the airbag using the supply and exhaust pump.

The method may further include, after the airbag is extracted, folding the clothing by folding a mounting plate on which the clothing is mounted.

The gas may be removed from the airbag on the mounting plate while the clothing is adsorbed on the mounting plate.

The mounting plate may be folded while the clothing is adsorbed on the mounting plate.

### ADVANTAGEOUS EFFECTS

According to an aspect of the disclosure, manipulating the clothing by folding unit may be facilitate.

### BRIEF DESCRIPTION OF THE DRAWING FIGURES

The above and other aspects, features, and advantages of certain embodiments of the present disclosure will be more apparent from the following description taken in conjunction with the accompanying drawings, in which:
FIG. 1 is a diagram illustrating an example of an overall configuration of a washing, drying, and folding robot, according to one or more embodiments;
FIGS. 2A and 2B are diagrams illustrating a dedicated hanger used in the washing, drying, and folding robot, according to one or more embodiments;
FIGS. 3A and 3B are diagrams illustrating a state in which clothing is hung on the dedicated hanger, according to one or more embodiments;
FIG. 4 is a configuration diagram of a washing and drying unit when viewed from the side, according to one or more embodiments;
FIG. 5 is a configuration diagram of the washing and drying unit when viewed from the front, according to one or more embodiments;
FIG. 6 is a diagram illustrating a flow of water during a washing operation of the washing and drying unit, according to one or more embodiments;
FIG. 7 is a diagram illustrating a drying unit used in the washing and drying unit, according to one or more embodiments;
FIGS. 8A to 8C are diagrams illustrating a drying operation of the washing and drying unit, according to one or more embodiments;
FIG. 9 is a configuration diagram of a folding unit when viewed from the side, according to one or more embodiments;
FIG. 10 is a configuration diagram of the folding unit when viewed from above, according to one or more embodiments;
FIGS. 11A and 11B are diagrams illustrating an adsorption operation on a folding bed, according to one or more embodiments;
FIGS. 12A and 12B are diagrams illustrating the adsorption operation on the folding bed, according to one or more embodiments;
FIGS. 13A and 13B are diagrams illustrating the adsorption operation on the folding bed, according to one or more embodiments;
FIGS. 14A and 14B are diagrams illustrating a folding operation on a folding bed, according to one or more embodiments;
FIGS. 15A and 15B are diagrams illustrating the folding operation on the folding bed, according to one or more embodiments;
FIGS. 16A and 16B are diagrams illustrating the folding operation on the folding bed, according to one or more embodiments;
FIGS. 17A and 17B are diagrams illustrating the folding operation on the folding bed, according to one or more embodiments;
FIGS. 18A and 18B are diagrams illustrating the folding operation on the folding bed, according to one or more embodiments;
FIGS. 19A and 19B are diagrams illustrating the folding operation on the folding bed, according to one or more embodiments;
FIG. 20 is a diagram illustrating an operation of a robot arm when moving folded clothing to a receiving part, according to one or more embodiments;
FIG. 21 is a diagram illustrating an airbag used in a drying unit of a washing, drying, and folding robot, according to one or more embodiments;
FIGS. 22A and 22B are diagrams illustrating a structure of an actuator, according to one or more embodiments; and
FIGS. 23A to 23E are diagrams illustrating a folding operation on the folding bed, according to one or more embodiments.

### DETAILED DESCRIPTION OF THE EXEMPLARY EMBODIMENTS

Hereinafter, embodiments of the present embodiments will be described in detail with reference to the accompanying drawings.

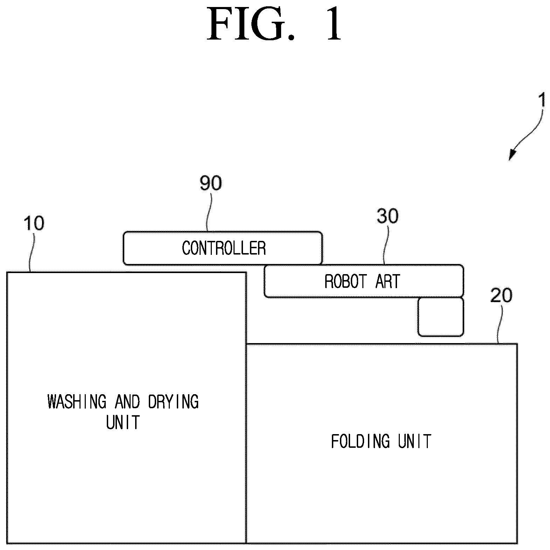

[FIG. 1 is a diagram illustrating an example of the overall configuration of a washing, drying, and folding robot 1, according to a first embodiment. In one or more examples, the washing, drying, and folding robot 1 may automatically perform washing, drying, folding, and receiving of clothing that a user hangs on a dedicated hanger. The washing, drying, and folding robot 1 is an example of a robotic device. However, as one or ordinary skill in the art, the robotic device is not limited to the configurations illustrated in FIG. 1

As illustrated, the washing, drying, and folding robot 1 includes, for example, a washing and drying unit 10, a folding unit 20, a robot arm 30, and a controller 90.

In one or more examples, the washing and drying unit 10 is a unit that performs washing and drying of clothing. Details of the washing and drying unit 10 will be described later.

In one or more examples, the folding unit 20 is a unit that folds and receives washed and dried clothing. Details of the folding unit 20 will also be described later.

In one or more examples, the robot arm 30 transports laundry from the washing and drying unit 10 to the folding unit 20.

In one or more examples, a controller 90 controls the washing and drying unit 10, the folding unit 20, and the robot arm 30.

### (DEDICATED HANGER)

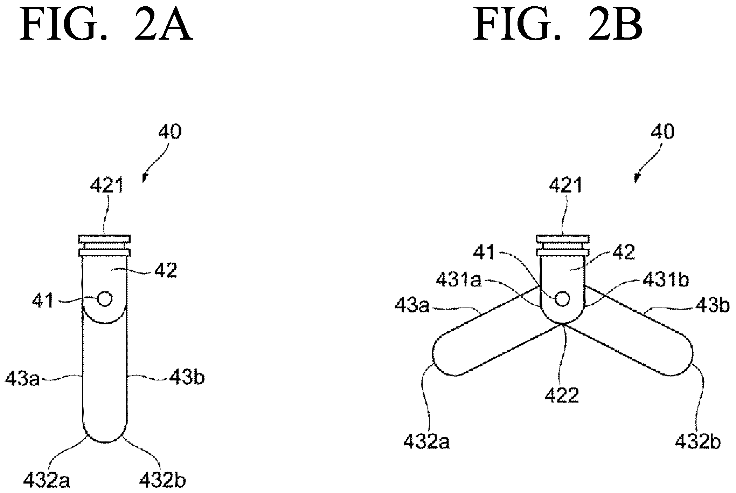

FIGS. 2A and 2B are diagrams illustrating a dedicated hanger 40 used in the washing, drying, and folding robot 1, according to one or more embodiments.

The dedicated hanger 40 may be provided with a folding mechanism 41. FIG. 2A illustrates a state in which the dedicated hanger 40 is folded, and FIG. 2B illustrates a state in which a folding function of the dedicated hanger 40 is released such that the dedicated hanger 40 is unfolded. For this reason, the dedicated hanger 40 can be folded and easily inserted into or extracted from a neck part or opening of clothing by an external entity power such as a user or the robot arm 30 (see FIG. 1).

In addition, the dedicated hanger 40 includes a neck part 42 and shoulder parts 43a and 43b. In one or more examples, the neck part 42 has a cylindrical shape with an opening 421 at the top and an opening 422 at the bottom. The shoulder parts 43a and 43b may have a cylindrical shape with openings 431a and 431b at connection portions with the neck part 42, respectively, and with openings 432a and 432b at a tip portion. For this reason, a drying unit 50 (described later) installed at a tip of the robot arm 30 (see FIG. 1) can be inserted into the dedicated hanger 40, and extend into a sleeve or body part of the clothing to inflate the clothing. The robot arm 30 is an example of an insertion unit that inserts an airbag into an inside of clothing through a hanger on which clothing is hung such as the dedicated hanger 40.

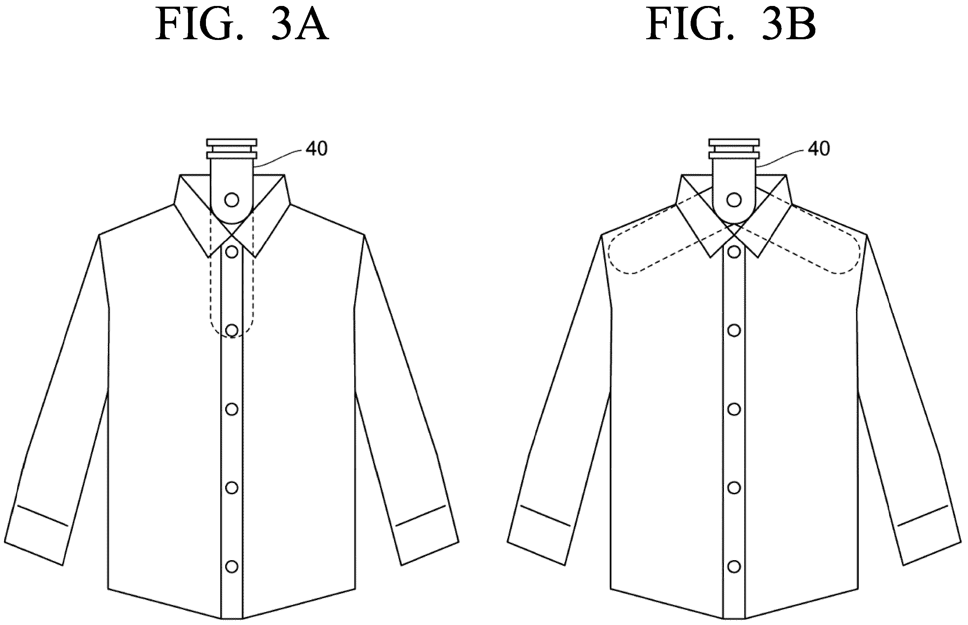

FIGS. 3A and 3B are diagrams illustrating a state in which clothing is hung on the dedicated hanger 40. FIG. 3A illustrates the state in which the dedicated hanger 40 is inserted from the neck part of the clothing in a folded state, and FIG. 3B illustrates the state in which the folding function is released while the dedicated hanger 40 is inserted such that the dedicated hanger is in an unfolded state.

In one or more examples a user hangs clothing on the dedicated hanger (40) . A user may keep buttons on the clothing buttoned, and the clothing does not fall off the dedicated hanger 40. In this state, the user may set clothing in the washing and drying unit 10. As a result, the clothing is advantageously washed and dried while hanging on the dedicated hanger 40.

An example configuration of the washing and drying unit 10 will be described, according to one or more embodiments.

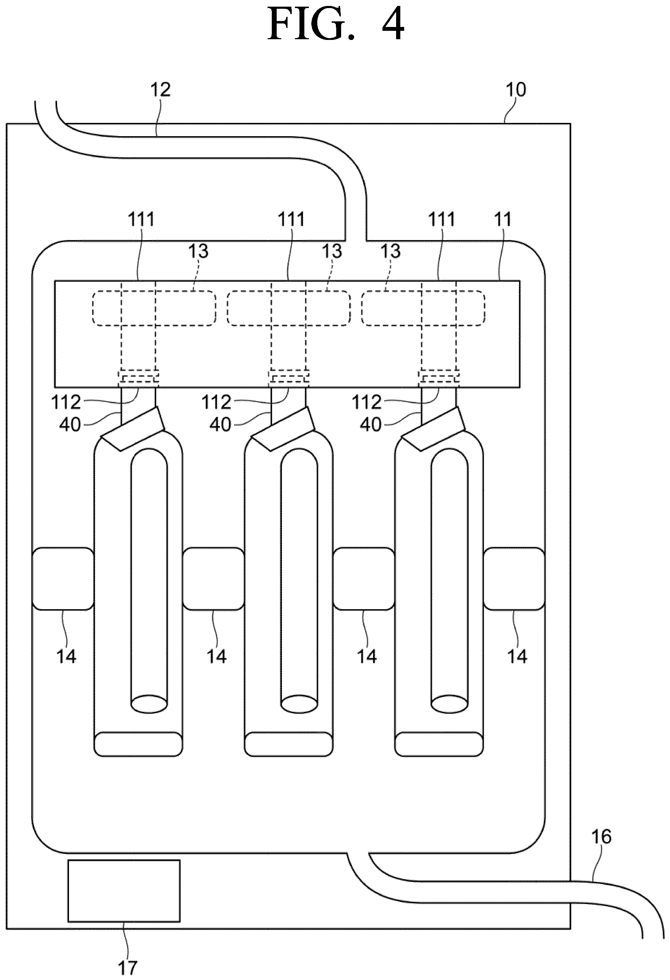

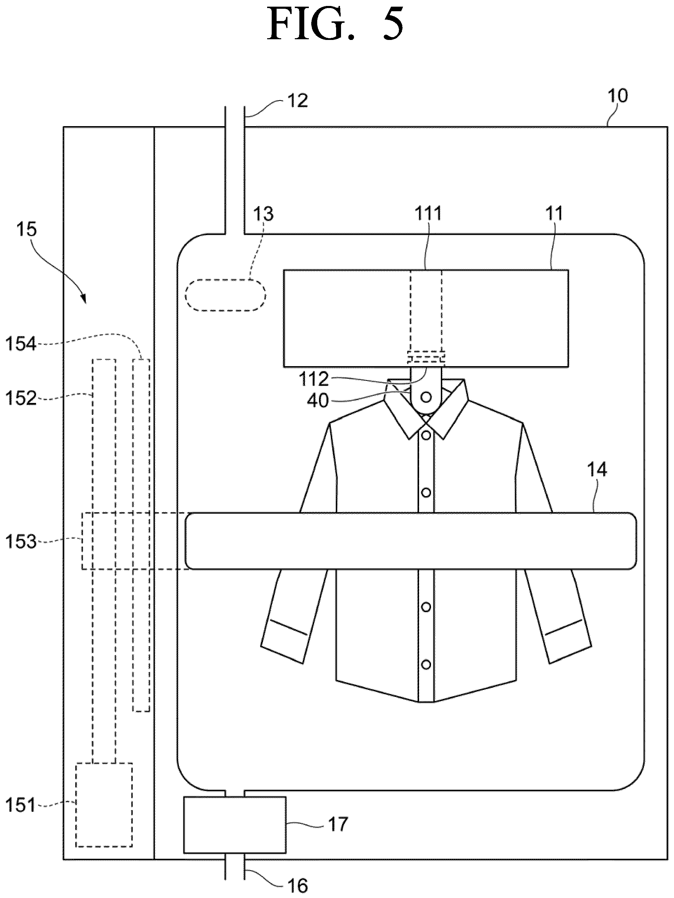

FIG. 4 is a diagram of the washing and drying unit 10 when viewed from a side of the washing and drying unit 10. FIG. 5 is a diagram of the washing and drying unit 10 when viewed from the front of the washing and drying unit 10. In addition, in the drawings, an example of washing and drying three pieces of clothing at the same time is illustrated. However, as understood by one of ordinary skill in the art, the washing and drying unit 10 may contain more than or fewer than three pieces of clothing.

As illustrated in FIGs. 4 and 5, the washing and drying unit 10 includes a hanger support part 11, a water supply pipe 12, a detergent case 13, a cleaning and dehydrating arm 14, a vertical movement mechanism 15, a drain pipe 16, and a vacuum pump 17. The detergent case 13 may be provided for each piece of clothing.

In one or more examples, the hanger support part 11 supports the dedicated hanger 40 on which clothing is hung. The hanger support part 11 has an opening 111 for inserting the drying unit 50 at the top and an opening 112 for inserting the dedicated hanger 40 at the bottom.

In one or more examples, the water supply pipe 12 is a pipe that supplies water used for washing to the washing and drying unit 10. The water supply pipe 12 respectively injects water mixed with detergent by passing through the detergent case 13 and water not mixed with detergent by not passing through the detergent case 13 to the cleaning and dehydrating arm 14.

In one or more examples, the detergent case 13 is a case for setting detergent. The detergent may be a liquid detergent, a powder detergent, a softener, or any other suitable detergent known to one of ordinary skill in the art.

In one or more examples, the cleaning and dehydrating arm 14 has a water spray mechanism and a vacuum suction mechanism, and moves up and down between clothing by the operation of the vertical movement mechanism 15 (Fig. 5). Subsequently, the cleaning and dehydrating arm 14 performs cleaning by repeating an operation of spraying a mixture of water and detergent from a spray port onto a surface and back of clothing using the water spray mechanism and sucking sewage from a suction port using the vacuum suction mechanism. In addition, the cleaning and dehydrating arm 14 performs rinsing by spraying only water from the water spray mechanism and sucking the water from the vacuum suction mechanism. In addition, the cleaning and dehydrating arm 14 performs dehydrating by performing only suction with the vacuum suction mechanism, without spraying water. The cleaning and dehydrating arm 14 is an example of a washing unit that washes clothing while hanging the clothing on a hanger.

In one or more examples, the vertical movement mechanism 15 has a motor 151, a feed screw 152, a feed nut 153, and a linear guide 154. The vertical movement mechanism 15 converts the rotational movement of the motor 151 into the linear movement of the feed nut 153 by the feed screw 152, thereby moving the cleaning and dehydrating arm 14 installed on the feed nut 153 up and down while being guided by the linear guide 154. In addition, when a plurality of cleaning and dehydrating arms 14 are provided as illustrated in FIG. 4, these cleaning and dehydrating arms 14 may be integrated and moved up and down.

The drain pipe 16 is a pipe through which the cleaning and dehydrating arm 14 drains the sewage (e.g., water or mixture of water and detergent) sucked by the vacuum suction mechanism.

In one or more examples, the vacuum pump 17 maintains the inside of the drain pipe 16 at a negative pressure so that sewage may be drained from the drain pipe 16.

Next, the washing operation of the washing and drying unit 10 will be described.

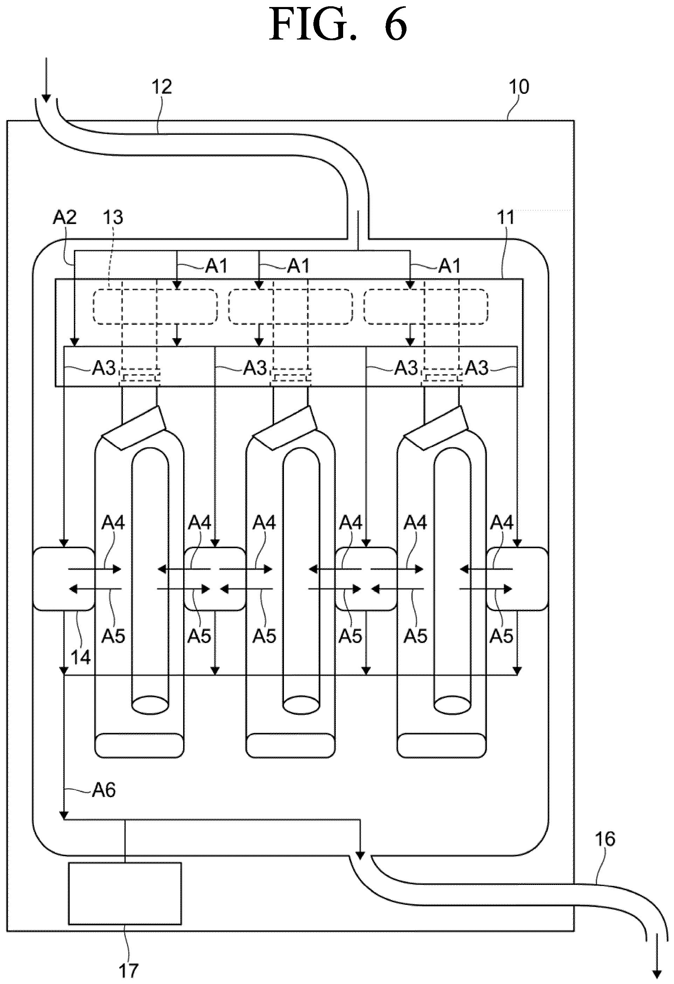

FIG. 6 is a diagram illustrating the flow of water during the washing operation of the washing and drying unit 10.

As illustrated, in the washing and drying unit 10, when cleaning is performed, the water supplied from the water supply pipe 12 is mixed with detergent as indicated by arrow A1, and supplied to the cleaning and dehydrating arm 14 as indicated by arrow A3. Then, the cleaning and dehydrating arm 14 sprays water mixed with detergent onto clothing as indicated by arrow A4 and sucks sewage as indicated by arrow A5. Thereafter, the sewage is drained into the drain pipe 16 as indicated by arrow A6. In one or more examples, the washing and drying unit 10 may form the flow of water based on a washing command from the controller 90 (see FIG. 1).

In one or more examples, in the washing and drying unit 10, when rinsing is performed, the water supplied from the water supply pipe 12 is not mixed with detergent as indicated by arrow A1, and supplied to the cleaning and dehydrating arm 14 as indicated by arrow A3. Then, the cleaning and dehydrating arm 14 sprays water not mixed with detergent onto clothing as indicated by arrow A4 and sucks sewage as indicated by arrow A5. Thereafter, the sewage is drained into the drain pipe 16 as indicated by arrow A6. In one or more examples, the washing and drying unit 10 may form the flow of water based on a rinsing command after washing from the controller 90 (see FIG. 1).

In one or more examples, in the washing and drying unit 10, when a dehydration process is performed, water as indicated by arrows A1 and A2 is not supplied to the cleaning and dehydrating arm 14. Then, the cleaning and dehydrating arm 14 does not spray water as indicated by arrow A4, but instead, sucks sewage as indicated by arrow A5. Thereafter, the sewage is drained into the drain pipe 16 as indicated by arrow A6. In one or more examples, the washing and drying unit 10 may form the flow of water based on a dehydrating command after rinsing from the controller 90 (see FIG. 1). Accordingly, the dehydration process may remove water or the mixture of water and detergent from the washing and drying unit 10.

Next, the drying unit used in the washing and drying unit 10 will be described.

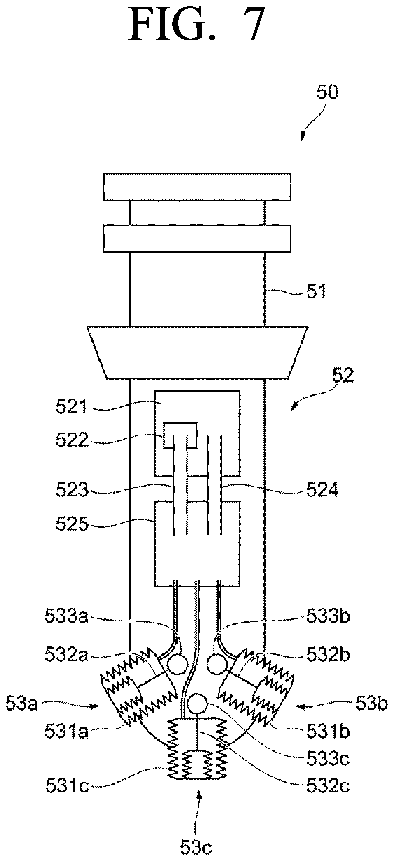

FIG. 7 is a diagram illustrating a drying unit 50, according to one or more embodiments.

As illustrated in FIG. 7, in one or more examples, the drying unit 50 includes a warm air blowing unit 52 and airbag units 53a to 53c within a unit main body 51.

In one or more examples, the warm air blowing unit 52 sends out hot air to the airbag units 53a to 53c. The warm air blowing unit 52 includes a supply and exhaust pump 521, a heater 522, an air supply pipe 523, an exhaust pipe 524, and a solenoid valve 525.

In one or more examples, the supply and exhaust pump 521 is a pump for supplying or sucking air.

In one or more examples, the heater 522 heats air supplied by the supply and exhaust pump 521.

In one or more examples, the air supply pipe 523 is a pipe that passes warm air (hot air) supplied to the airbag units 53a to 53c warmed by the heater 522.

In one or more examples, the exhaust pipe 524 is a pipe that passes air exhausted from the airbag units 53a to 53c.

In one or more examples, the solenoid valve 525 is a valve that electrically switches air supply from the supply and exhaust pump 521 to the airbag units 53a to 53c and exhaust air from the airbag units 53a to 53c to the supply and exhaust pump 521.

In one or more examples, the airbag units 53a to 53c are expandable and deflatable units provided at a lower end of the drying unit 50. The airbag units 53a to 53c each include airbags 531a to 531c, wires 532a to 532c, and winding mechanisms 533a to 533c.

In one or more examples, the airbags 531a to 531c can be expanded when air enters, and can be inflated by expanding a right sleeve, a left sleeve, and a torso of clothing thereinto, respectively. The airbags 531a to 531c dry clothing by circulating warm air sent out by the warm air blowing unit 52 within the clothing while the clothing is inflated. In one or more examples, the airbags 531a to 531c may dry clothing by emitting warm gas.

In one or more examples, the tips of the wires 532a to 532c are fixed to tips of the airbags 531a to 531c, respectively, and are released from the winding mechanisms 533a to 533c as the airbags 531a to 531c are expanded. In addition, the wires 532a to 532c are wound around the winding mechanisms 533a to 533c, respectively, thereby deflating the airbags 531a to 531c by allowing their outer sides to go inwards.

The winding mechanisms 533a to 533c are mechanisms that wind the wires 532a to 532c, respectively. The winding mechanisms 533a to 533c may be implemented using a mainspring or any other suitable structure known to one of ordinary skill in the art.

In one or more examples, here, each component is given subscripts a, b, and c, but when generically referring to each component, for example, a subscript is not added (e.g., 'airbag 531').

The drying unit 50 is an example of a drying unit that dries clothing while hanging the clothing on a hanger.

Next, the drying operation of the washing and drying unit 10 will be described.

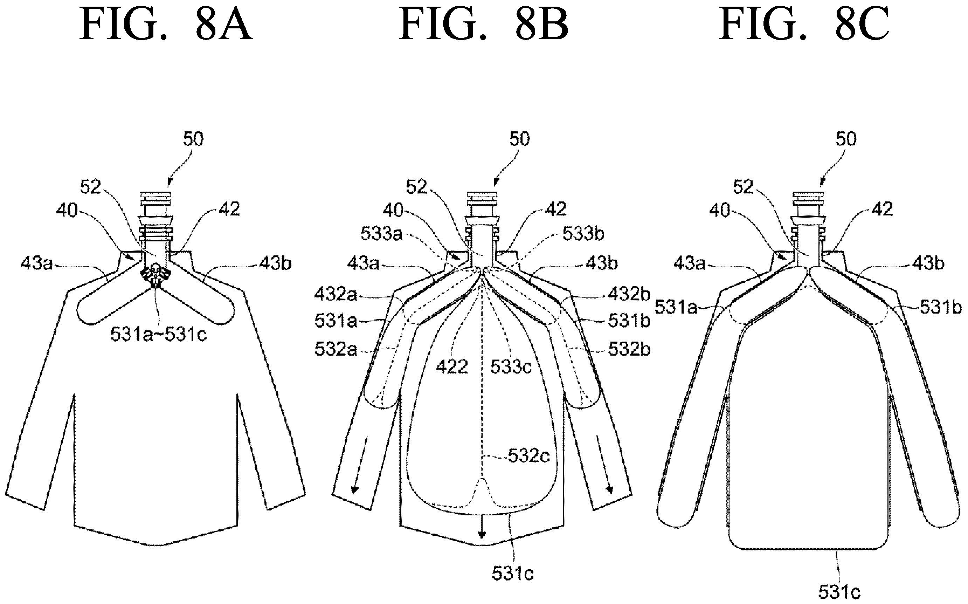

FIGS. 8A to 8C are diagrams illustrating a drying operation, according to one or more embodiments.

In FIG. 8A, in one or more examples, the drying unit 50 is inserted into the opening 421 of the neck part 42 of the dedicated hanger 40 on which clothing is hung by the robot arm 30 (see FIG. 1). Upon insertion, the airbags 531a to 531c may be in a deflated state. In one or more examples, the robot arm 30 may insert the drying unit 50 into the dedicated hanger 40 based on an insertion command from the controller 90 (see FIG. 1). The robot arm 30 is an example of the insertion unit that inserts the deflated airbag into clothing.

In FIG. 8B, the warm air blowing unit 52 of the drying unit 50 is putting air into the airbags 531a to 531c of the drying unit 50. As a result, the airbags 531a and 531b extend into the sleeve of clothing through the openings 432a and 432b of the shoulder parts 43a and 43b of the dedicated hanger 40, respectively. In addition, the airbag 531c extends to the torso of the clothing through the opening 422 of the neck part 42 of the dedicated hanger 40. Here, in the drawings, the wires 532a to 532c connected to the tips of the airbags 531a to 531c may be unwound from the winding mechanisms 533a to 533c. In one or more examples, the warm air blowing unit 52 may send out hot air to the airbags 531a to 531c based on an air supply command from the controller 90 (see FIG. 1). The warm air blowing unit 52 is an example of an expansion unit that inflates clothing by putting gas into the airbag to expand the airbag. The warm air may increase a temperature of the airbag to facilitate drying.

In FIG. 8C, the airbags 531a to 531c of the drying unit 50 are fully expanded and inflate clothing. In this state, in the drying unit 50, the warm air blowing unit 52 dries clothing by circulating hot air through the airbags 531a to 531c. In addition, the warm air blowing unit 52 may send out hot air to the airbags 531a to 531c until it receives a command to stop sending out the hot air from the controller 90 (see FIG. 1), for example, after a predetermined time has elapsed. The warm air blowing unit 52 is an example of the expansion unit that dries clothing by turning gas put into the airbag into warm air. For example, the warm air blowing unit 52 increases a temperature of a gas in the airbags.

In one or more examples, a new type of flexible extendable robot developed by researchers at Stanford University may be used as the airbag units 53a and 53b.

In one or more examples, as the airbag units 53a to 53c, springs disposed on both sides of the wire may be used. For examples, springs may be provided on the left and right sides of the wire 532c, taking the airbag unit 53c in FIG. 8B as an example. The airbag units 53a to 53c are in the state illustrated in FIG. 8A when the spring is shortened, and are in the state illustrated in FIG. 8C when the spring is extended.

The configuration of the folding unit 20 will be described, according to one or more embodiments.

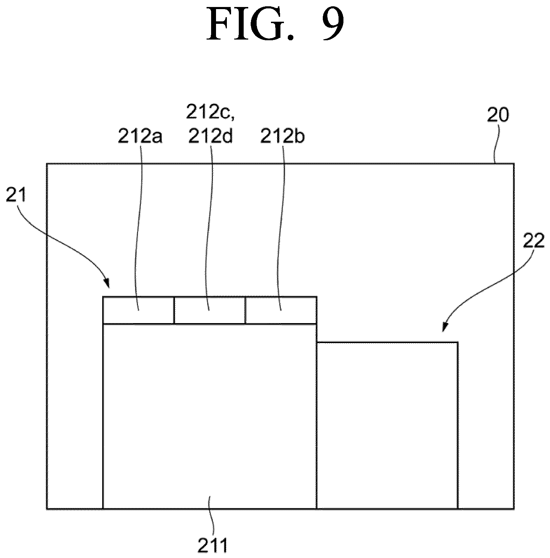

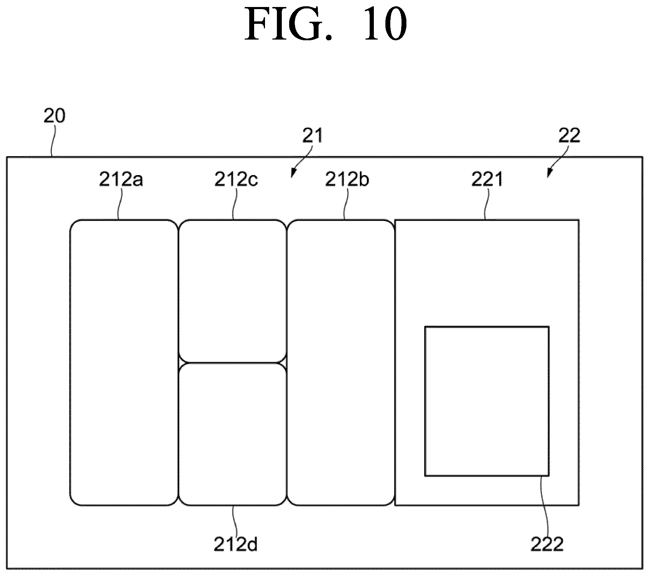

FIG. 9 is a configuration diagram of the folding unit 20 when viewed from the side. FIG. 10 is a configuration diagram of the folding unit 20 when viewed from above. In the drawing when the folding unit 20 is viewed from the side, the left side of the drawing is called 'left', the right side of the drawing is called 'right', and in the drawing when the folding unit 20 is viewed from above, in addition, the upper side of the drawing is referred to as 'upper', and the lower side of the drawing is referred to as 'lower'.

A folding bed 21 is a bed that may be used to fold washed and dried clothing. In one or more examples, the folding bed 21 includes a bed stand 211 and bed plates 212a to 212d.

In one or more examples, the bed stand 211 is a stand that supports the bed plates 212a to 212d.

In one or more examples, the bed plates 212a to 212d adsorb and release clothing under a vacuum. The bed plate 212a overlaps the bed plates 212c and 212d by standing up and rotating its left side around its right axis. The bed plate 212b overlaps the bed plates 212c and 212d by standing up and rotating its right side around its left axis. The bed plate 212d overlaps the bed plate 212c by standing up and rotating its lower side around its upper axis.

In one or more examples, a receiving part 22 receives clothing folded in the folding bed 21. The receiving part 22 is provided with a clothing stock part 222 in a receiving part main body 221.

The clothing stock part 222 stocks clothing folded on the folding bed 21.

Next, a folding operation on the folding bed 21 will be described, according to one or more embodiments.

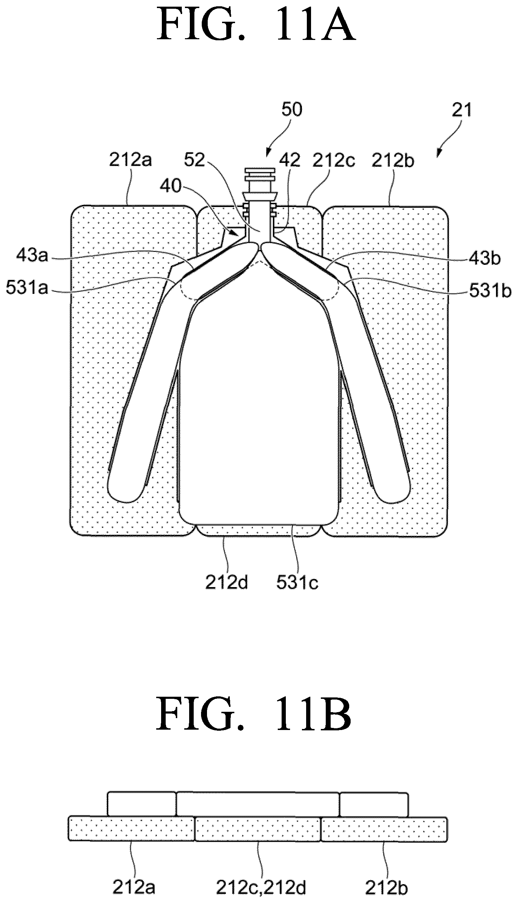

FIGS. 11A and 11B to 13Aand 13B are diagrams illustrating a adsorption operation on the folding bed 21. FIGs. 11A, 12A, and 13A represent the state in which the bed plate 212 is viewed from above, and FIGs. 11B, 12B, and 13B represent the state in which the bed plate 212 is viewed from the side.

First, the robot arm 30 (see FIG. 1) moves clothing, which may be washed and dried in the washing and drying unit 10, to the folding bed 21. For example, the robot arm 30 may extract the dedicated hanger 40 using a detachment mechanism installed at a tip of the robot arm 30, and move the clothing to the folding bed 21 while hanging on the dedicated hanger 40. FIGS. 11A and 11B illustrate the state of the bed plate 212, the clothing, etc., at that time. In FIGS. 11A and 11B, the airbags 531a to 531c of the drying unit 50 are expanded, which results in the clothing being inflated. In one or more examples, the robot arm 30 may move clothing from the washing and drying unit 10 to the folding bed 21 based on a movement command from the controller 90 (see FIG. 1).

Next, the folding bed 21 adsorbs clothing to the bed plate 212 while the warm air blowing unit 52 of the drying unit 50 takes out air in the airbags 531a to 531c. For example, as the air is removed from the airbags 531a to 531c, the clothing conforms to a surface of the bed plate 212.

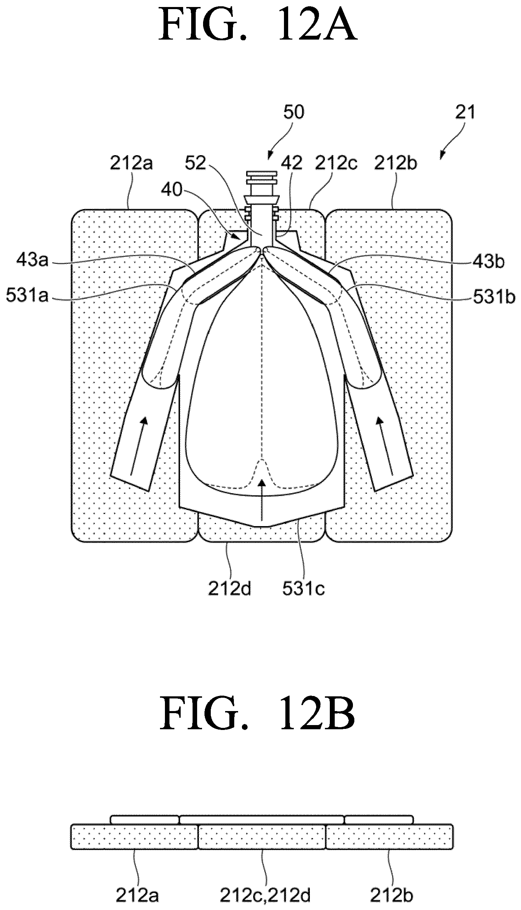

FIGS. 12A and 12B illustrate the state of the bed plate 212 and clothing in a state in which the airbags 531a to 531c are deflated by taking out air, so the clothing is no longer in an inflated state. In one or more examples, the warm air blowing unit 52 may take out air in the airbags 531a to 531c based on an exhaust command from the controller 90 (see FIG. 1). In one or more examples, the folding bed 21 may adsorb clothing based on the adsorption command from the controller 90. The warm air blowing unit 52 is an example of a deflation unit that takes out gas from the airbag and deflates the airbag. The bed plate 212 is an example of a mounting plate, and the warm air blowing unit 52 is an example of the deflation unit that takes out gas from an airbag on the mounting plate while adsorbing clothing on the mounting plate.

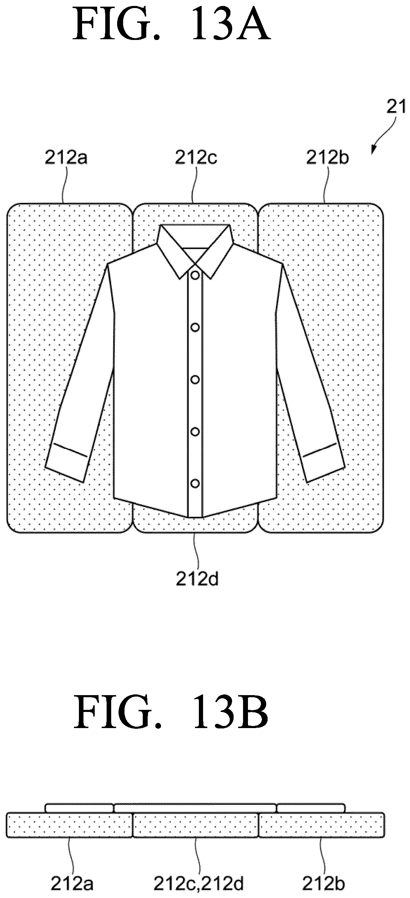

Next, the robot arm 30 (see FIG. 1) extracts the drying unit 50 from the dedicated hanger 40, folds the dedicated hanger 40, and extracts it from the clothing. FIGS. 13A and 13B illustrate the state of the bed plate 212 and the clothing in which the airbags 531a to 531c are extracted from the clothing. In one or more examples, the robot arm 30 may extract the drying unit 50 and the dedicated hanger 40 from the clothing based on an extraction command from the controller 90 (see FIG. 1). The robot arm 30 is an example of an extraction unit that extracts the deflated airbag from the clothing.

Thereafter, the folding unit 20 performs a folding operation by rotating and folding the bed plate 212, stopping suction of the bed plate 212 in the required order, and releasing the adsorption of clothing. In one or more examples, the bedplate 212 may include one or more holes in which are sucked through to cause clothing to be adsorbed to the bed plate 212.

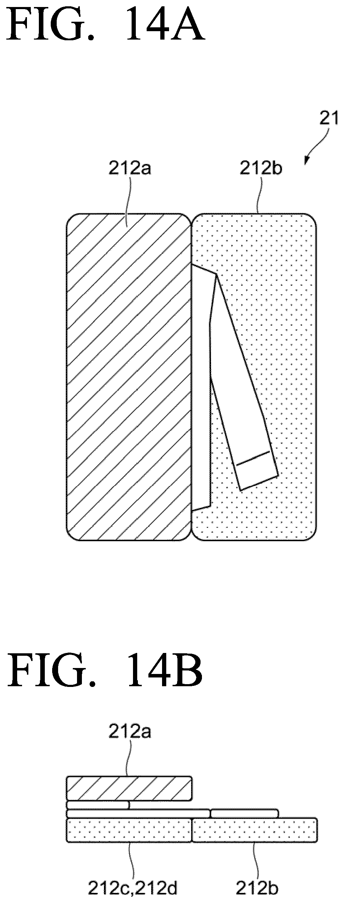

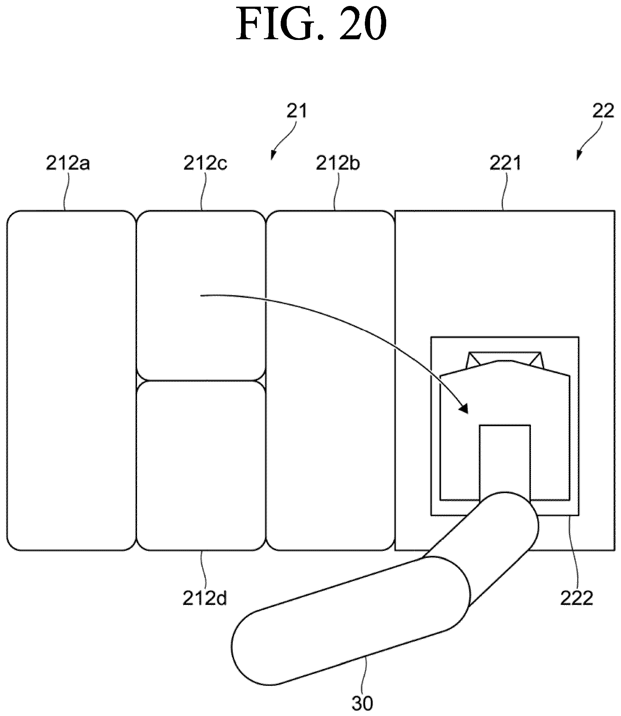

FIGS. 14A and 14B to 20A and 20B are diagrams illustrating the folding operation on the folding bed 21. FIGs. 14A, 15A, 16A, 17A, 18A, 19A, and 20A represent the state in which the bed plate 212 is viewed from above. FIGs. 14B, 15B, 16B, 17B, 18B, 19B, and 20B represent the state in which the bed plate 212 is viewed from the side. In each drawing, the bed plate 212 that adsorbs clothing is illustrated by dot hatching, the bed plate 212 that adsorbs, heats, and presses clothing is illustrated by diagonal hatching, and the bed plate 212, which is neither adsorbing nor heating or pressing clothing, is illustrated on a white background.

FIGS. 14Aand 14B illustrate the state in which the bed plate 212a overlaps the bed plates 212c and 212d by rotating from left to right. In this case, the bed plate 212a is heating and pressing clothing while adsorbing the clothing, as indicated by diagonal hatching.

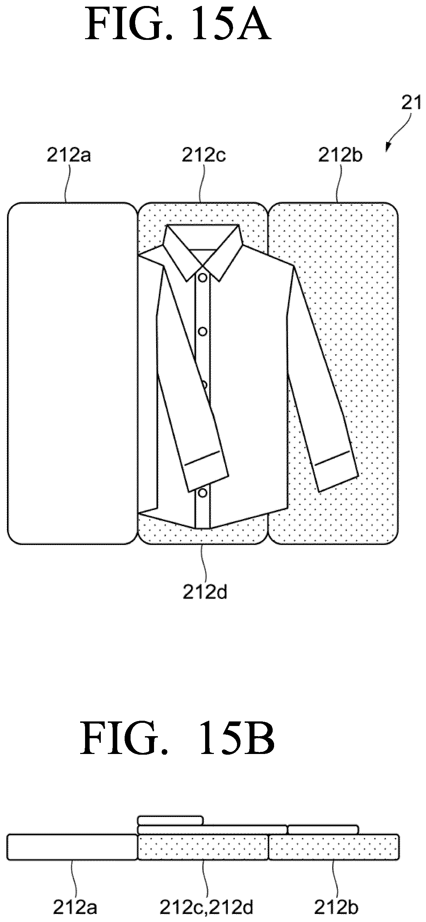

FIGS. 15A and 15B illustrate the state in which the bed plate 212a returns to its original state by rotating from right to left. In this case, the bed plate 212a is neither adsorbing nor heating or pressing clothing, as indicated by the white background.

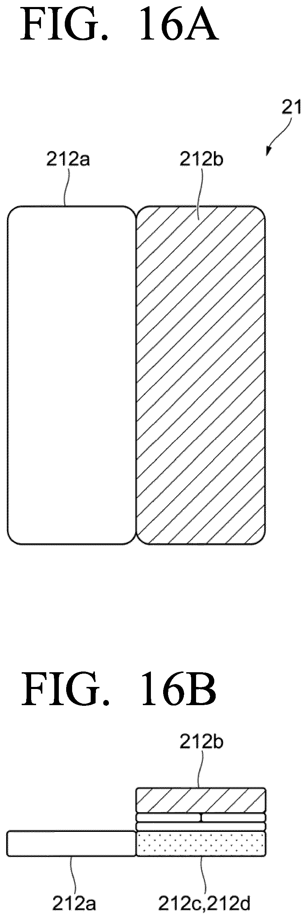

FIGS. 16Aand 16B illustrate the state in which the bed plate 212b overlaps the bed plates 212c and 212d by rotating from right to left. In this case, the bed plate 212b is heating and pressing clothing while adsorbing the clothing, as indicated by diagonal hatching.

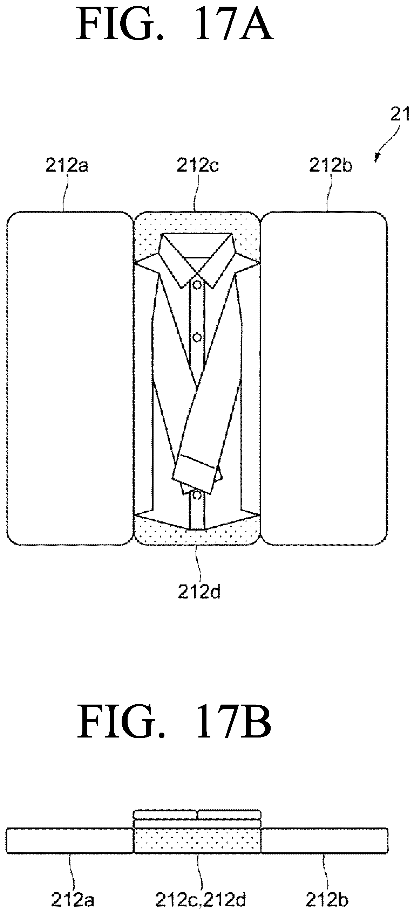

FIGS. 17A and 17B illustrate the state in which the bed plate 212b returns to its original state by rotating from left to right. In this case, the bed plate 212b is neither adsorbing nor heating or pressing clothing, as indicated by the white background.

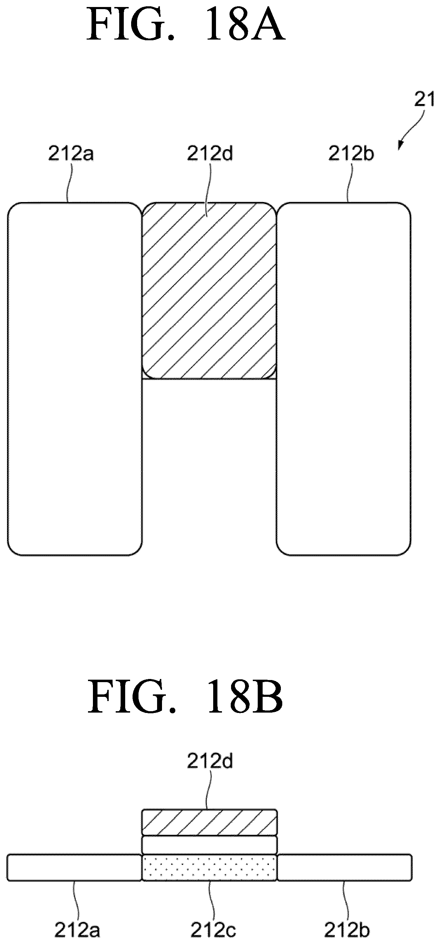

FIGS. 18Aand 18B illustrate the state in which the bed plate 212d overlaps the bed plate 212c by rotating the bed plate 212d from top to bottom. In this case, the bed plate 212c is heating and pressing clothing while adsorbing the clothing, as indicated by diagonal hatching.

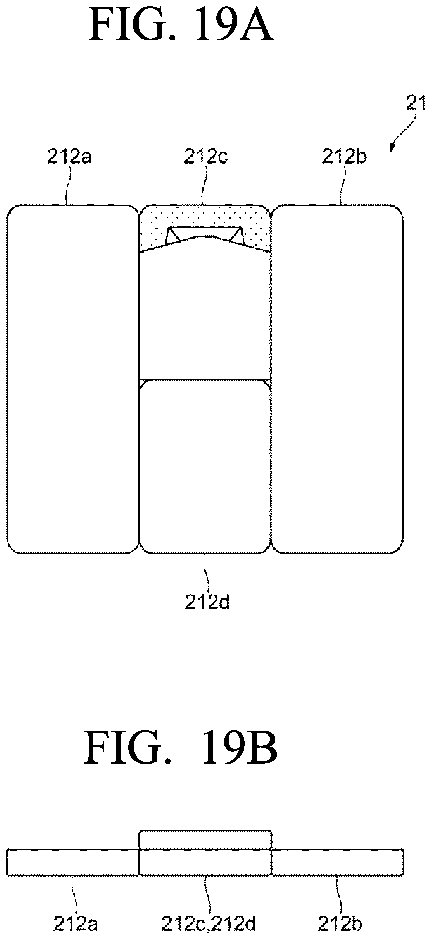

FIGS. 19A and 19B illustrate the state in which the bed plate 212b returns to its original state by rotating from top to bottom. In this case, the bed plate 212d is neither adsorbing nor heating or pressing clothing, as indicated by the white background.

In one or more examples, the folding bed 21 may rotate the bed plates 212a, 212b, and 212d based on a rotation command from the controller 90 (see FIG. 1). The folding bed 21 is an example of the folding unit that folds clothing by folding the mounting plate on which the clothing is mounted after the airbag is extracted. The folding bed 21 is also an example of a folding unit that folds the mounting plate while adsorbing clothing on the mounting plate, and a folding unit that folds the mounting plate while heating and pressing the clothing on the mounting plate.

In one or more examples, during the folding operation on the folding bed 21, the robot arm 30 (see FIG. 1) may correct minor positional errors in clothing. For example, the washing, drying, and folding robot 1 may include one or more image sensors that captures an image of a clothing during a folding operation, where based on one or more captured images, the controller 90 instructs the robot arm 30 to perform one or more correction operations.

Next, the receiving operation into the receiving part 22 will be described.

After the folding of clothing is performed on the folding bed 21, the robot arm 30 moves the folded clothing to the receiving part 22.

FIG. 20 is a diagram illustrating the operation at that time. As illustrated in FIG. 20, the robot arm 30 moves the folded clothing on the bed plate 212c of the folding bed 21 to the clothing stock part 222 of the receiving part 22. In one or more examples, the robot arm 30 may move clothing from the folding bed 21 to the receiving part 22 based on a movement command from the controller 90 (see FIG. 1).

In the one or more embodiments of the present disclosure, the drying unit 50 expands the airbag 531 to inflate the clothing, and then extracts the airbag 531, and the folding bed 21 folds the bed plate 212 on which the clothing is disposed to fold the clothing. As a result, in the first embodiment, the manipulation of folding clothing in an unfolded shape becomes easier without giving the airbag 531 a special shape.

A washing, drying, and folding robot 1 according to a second embodiment is different from the washing, drying, and folding robot 1 according to the first embodiment in terms of an airbag structure used in the drying unit 50. In one or more examples, in the second embodiment, a bed plate 212 of a folding bed 21 is not divided as in the first embodiment.

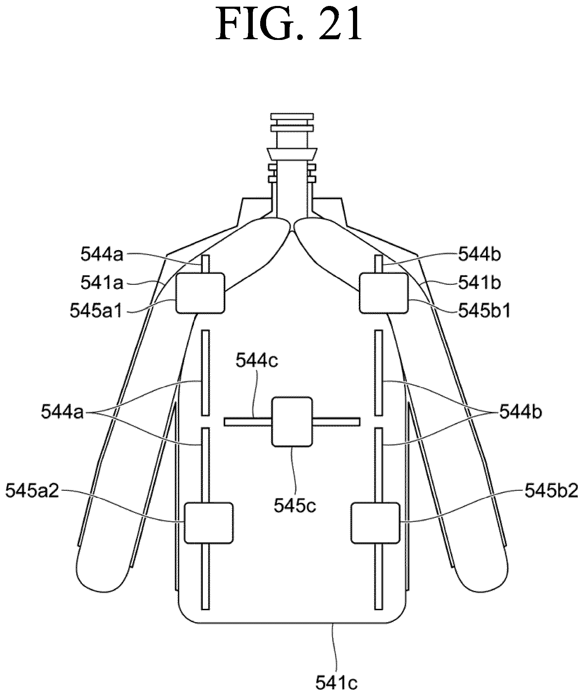

FIG. 21 is a diagram illustrating airbags 541a to 541c used in a drying unit 50 of the washing, drying, and folding robot 1 in the second embodiment. As illustrated, the airbags 541a to 541c have folding lines 544a to 544c and are shaped to be easy to fold. Actuators 545a1 and 545a2 are disposed at the folding line 544a, actuators 545b1 and 545b2 are disposed at the folding line 544b, and actuators 545c are disposed at the folding line 544c. In one or more examples, each component is given the subscripts a, b, c, a1, a2, b1, and b2, but when generically referring to each component, for example, 'airbag 541', the subscript is omitted. The actuator 545 is an example of the folding unit that folds clothing by folding the airbag before the airbag is extracted.

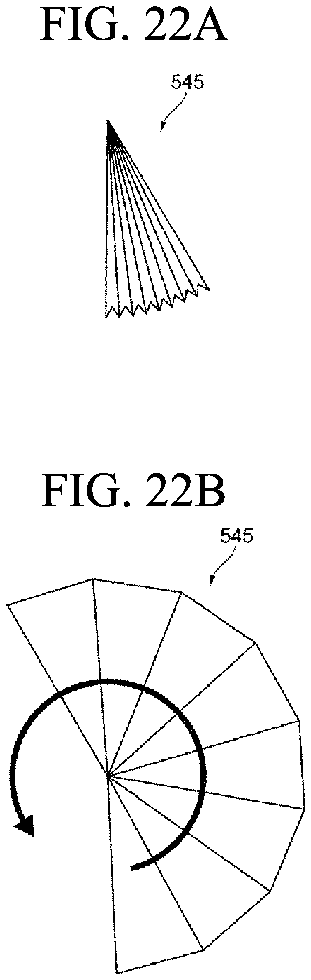

FIGS. 22A and 22B are diagrams illustrating a structure of the actuator 545. When the airbag 541 is deflated, the actuator 545 is closed as illustrated in FIG. 22A. When the airbag 541 is expanded, the actuator 545 is open as illustrated in FIG. 22B. When the airbag 541 is deflated again, the actuator 545 is closed as illustrated in FIG. 22A. As a result, the airbag 541 can be folded 180° along the folding line 544.

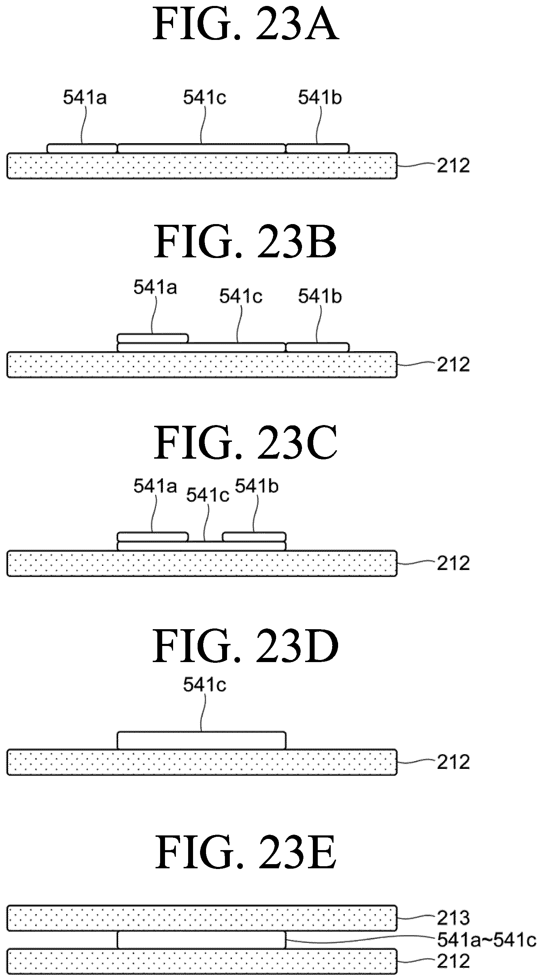

FIGS. 23A to 23E are diagrams illustrating a folding operation on the folding bed. In these drawings, the left side of the drawing is referred to as 'left', and the right side of the drawing is referred to as 'right'.

Initially, as illustrated in FIG. 23A, on the bed plate 212, the airbag 541a is disposed on the left side of the airbag 541c, and the airbag 541b is disposed on the right side of the airbag 541c.

Next, when the actuators 545a1 and 545a2 (see FIG. 21) are closed, as illustrated in FIG. 23B, on the bed plate 212, the airbag 541a is folded along the folding line 544a (see FIG. 21), and overlaps the left half of the airbag 541c.

Next, when the actuators 545b1 and 545b2 (see FIG. 21) are closed, as illustrated in FIG. 23C, on the bed plate 212, the airbag 541b is folded along the folding line 544b (see FIG. 21), and overlaps the right half of the airbag 541c.

Next, when the actuator 545c (see FIG. 21) is closed, as illustrated in FIG. 23D, on the bed plate 212, the lower half of the airbag 541c is folded along the folding line 544c (see FIG. 21), and overlaps the upper half of the airbag 541c.

Finally, the airbags 541a to 541c disposed on the bed plate 212 are pressed on a press plate 213, as illustrated in FIG. 23E. Thereafter, the airbags 541a to 541c are extracted from the clothing. In addition, the actuator 545 may fold the airbag 541 based on a folding command from the controller 90 (see FIG. 1).

However, in the second embodiment, while the folding line 544 and the actuator 545 are provided in the airbag 541, only the folding line 544 may be provided. However, in this case, since the actuator 545 may not fold the airbag 541, for example, the robot arm 30 folds the airbag 541. In one or more examples, the robot arm 30 may fold the airbag 541 based on a folding command from the controller 90. In this case, the robot arm 30 is an example of a folding unit that folds the airbag at the folding line.

In the second embodiment, the drying unit 50 expands the airbag 541 to inflate the clothing, and the actuator 545 folds the airbag 541 to fold the clothing and then extracts the airbag 541. As a result, in the second embodiment, it becomes easier to fold clothing by making the clothing into an unfolded shape without dividing the bed plate 212.

In the first and second embodiments, among clothing for an upper body, a long-sleeved shirt is assumed as clothing, but it is not limited thereto. As clothing, for example, short-sleeved shirts, short-sleeved T-shirts, tank tops, etc., among the clothing for the upper body, and long pants, shorts, and other pants among clothing for a lower body may be considered. In this case as well, the dedicated hanger 40 and the airbags 531 and 541 are provided for the clothing, and the folding unit 20 performs a folding operation while the clothing is set in an appropriate position.

## Claims

1. A robotic device comprising:
an insertion unit configured to insert a deflated airbag into an inside of clothing;
an expansion unit configured to inflate the clothing by inserting gas into the airbag to expand the airbag;
a deflation unit configured to deflate the airbag by taking out the gas from the airbag; and
an extraction unit configured to extract the deflated airbag from the inside of the clothing.

2. The robotic device of claim 1, wherein the expansion unit is further configured to dry the clothing by increasing a temperature of the gas inserted into the airbag.

3. The robotic device of claim 1, wherein the expansion unit is further configured to insert the gas into the airbag using a supply and exhaust pump, and
the deflation unit is further configured to extract the gas from the airbag using the supply and exhaust pump.

4. The robotic device of claim 1, further comprising:
a folding unit configured to fold the clothing by folding a mounting plate on which the clothing is mounted.

5. The robotic device of claim 4, wherein the deflation unit is further configured to remove the gas from the airbag on the mounting plate while the clothing is adsorbed on the mounting plate.

6. The robotic device of claim 4, wherein the folding unit is further configured to fold the mounting plate while the clothing is adsorbed on the mounting plate.

7. The robotic device of claim 4, wherein the folding unit is further configured to fold the mounting plate while the clothing is heated and pressed on the mounting plate.

8. The robotic device of claim 1, further comprising:
a folding unit configured to fold the clothing by folding the airbag while the airbag is inserted in the clothing.

9. The robotic device of claim 8, wherein the airbag has a folding line for folding.

10. The robotic device of claim 9, wherein the folding unit comprises a robot arm is further configured to fold the airbag at the folding line.

11. The robotic device of claim 9, wherein the folding unit comprises an actuator provided at the folding line and configured to fold the airbag at the folding line.

12. The robotic device of claim 1, wherein the insertion unit is further configured to insert the airbag into the clothing through a hanger on which the clothing is hung.

13. The robotic device of claim 12, further comprising:
a washing unit configured to wash the clothing while the clothing is hung on the hanger.

14. The robotic device of claim 12, further comprising:
a drying unit configured to dry the clothing while the clothing is hung on the hanger.

15. A method performed by a robotic device, the method comprising:
inserting a deflated airbag into an inside of clothing;
inflating the clothing by inserting gas into the airbag to expand the airbag;
deflating the airbag by removing the gas from the airbag; and
extracting the deflated airbag from the inside of the clothing.
